# EUROPÄISCHE PATENTSCHRIFT

(11) **EP 3 271 604 B1**
(45) Veröffentlichungstag und Bekanntmachung des Hinweises auf die Patenterteilung: **22.05.2019**
(21) Anmeldenummer: 16710439.7
(22) Anmeldetag: 18.03.2016
(51) Int. Cl.: F16D 65/18, F16D 65/56

(54) **SCHEIBENBREMSE FÜR EIN NUTZFAHRZEUG**
DISC BRAKE FOR A UTILITY VEHICLE
FREIN À DISQUE POUR VÉHICULE UTILITAIRE

(30) Priorität: 20.03.2015 DE 102015104183
(43) Veröffentlichungstag der Anmeldung: 24.01.2018
(73) Patentinhaber: KNORR-BREMSE Systeme für Nutzfahrzeuge GmbH, 80809 München (DE)
(72) Erfinder: SCHÖFBERGER, Tobias, 84048 Mainburg (DE); FISCHER, Rudolf, 85435 Erding (DE); BALINT, Peter, 71120 Grafenau (DE); KLINGNER, Matthias, 82272 Moorenweis (DE); PESCHEL, Michael, 82296 Schöngeising (DE); WEBER, Ralf, 80997 München (DE)
(86) Internationale Anmeldenummer: PCT/EP2016/055908
(87) Internationale Veröffentlichungsnummer: WO 2016/150832

(56) Entgegenhaltungen:
- EP-A1- 2 410 198
- DE-A1- 4 212 352
- DE-T2- 69 610 094
- DE-U1- 9 422 342

## Beschreibung

Die Erfindung betrifft eine Scheibenbremse für ein Nutzfahrzeug nach dem Oberbegriff des Anspruchs 1.

Eine gattungsgemäße Scheibenbremse ist in DE 94 22 342 U1 offenbart. Diese Scheibenbremse weist einen Bremshebel auf, der bei einer Bremsung auf eine Brücke einwirkt, in der mindestens eine Stellspindel verdrehbar gelagert ist. Diese weist ein Druckstück auf, das bei Betätigung der Bremse durch Verschieben der Brücke an einen Bremsbelag gepresst wird.

Zum Ausgleich einer verschleißbedingten Änderung eines vorbestimmten Lüftspiels, d.h. des Abstands zwischen dem Bremsbelag und der Bremsscheibe, ist eine Nachstelleinrichtung vorgesehen, mit der die Stellspindel durch Verdrehen in Richtung der Bremsscheibe verstellt wird. Hierzu ist die Stellspindel mit einem Außengewinde versehen, das in eine dazu korrespondierende Gewindebohrung der Brücke eingreift.

Ein Aufnahmeraum des Bremssattels, in dem die Brücke und der Bremshebel positioniert sind, wird außenseitig, d.h. zur Bremsscheibe hin, durch eine Verschlussplatte verschlossen, die von der Stellspindel durchtreten wird.

Zur Abdichtung dieses Durchtrittsbereichs ist ein Faltenbalg vorgesehen, der einerseits an der Verschlussplatte und andererseits am Druckstück gehalten ist. Dieser besteht üblicherweise aus einem hochelastischen Material, beispielsweise einem Silikonkautschuk, um die Stellspindel über die gesamte Nachstellstrecke überdecken zu können. Zur Zurückstellung der Brücke nach einer Bremsung ist zwischen der Verschlussplatte und der Brücke eine Druckfeder angeordnet.

Hinsichtlich der Belastbarkeit, d.h. der Standzeit des Balges ergeben sich insoweit Probleme, als die beim Bremsen entstehenden relativ hohen Temperaturen auf den Balg einwirken, so dass dieser als Verschleißteil ausgetauscht werden muss.

Dies ist jedoch aufgrund der beengten Platzverhältnisse nur mit einem erheblichen Arbeitsaufwand möglich, der die Unterhaltskosten der Scheibenbremse deutlich nachteilig beeinflusst.

Abgesehen vom zeitlichen Aufwand muss zum Austausch des Balges die Stellspindel mittels der Nachstelleinrichtung zurückgedreht werden, wobei, um diese zu schützen, beim Rück- und Zustellen ein Abreißabdapter Verwendung findet, der bei Überschreiten eines bestimmten Drehmoments bricht und so einen Nachsteller der Nachstelleinrichtung vor Überlastung schützt. Des Weiteren wird eine Ausrücksicherung der Nachstelleinrichtung benötigt, da ansonsten die Stellspindel gegen den Nachsteller axial verspannt wird, was dazu führt, dass zum Lösen ein höheres Drehmoment benötigt wird als der Abreißadapter übertragen kann.

Aus der DE 10 2008 010 462 A1 ist eine Scheibenbremse bekannt, deren Brücke keine Gewindebohrung aufweist, sondern ein Sackloch, in dem ein Druckstempel kippbeweglich gelagert ist, wobei der Druckstempel mittels eines Koppelrings, der in umfängliche Nuten der Brücke einerseits und des Druckstempel andererseits einliegt, axial gesichert, jedoch verdrehbar in der Brücke gehalten ist. Überdies ist der Druckstempel nicht mit einem diesem gegenüber verdrehbaren Druckstück versehen, sondern das Druckstück ist einstückiger Bestandteil des Druckstempels. Insoweit gibt diese Literatur einen gattungsfremden Stand der Technik wieder.

Der Erfindung liegt die Aufgabe zugrunde, eine Scheibenbremse der gattungsgemäßen Art so weiterzuentwickeln, dass sie einfacher und kostengünstiger herstell- und montierbar ist und ein Verschleißteilwechsel einfacher wird.

Diese Aufgabe wird durch eine Scheibenbremse mit den Merkmalen des Anspruchs 1 gelöst.

Die neue Scheibenbremse zeichnet sich zunächst einmal dadurch aus, dass sie wesentlich einfacher herstellbar ist als bisher. Hierzu trägt insbesondere bei, dass auf die zum Stand der Technik genannte Ausrücksicherung der Nachstelleinrichtung verzichtet werden kann, da durch den erfindungsgemäß vorgesehenen Sicherungsring eine Rückdrehsicherung geschaffen ist.

Aus dem Stand der Technik ist es bekannt, einen Zugmitteltrieb der Nachstelleinrichtung, die Stellspindeln, die Brücke sowie die Verschlussplatte als Hauptbestandteile als vormontierte Baueinheit in den Aufnahmeraum des Bremssattels einzubringen.

Hierzu ist es erforderlich, dass die gesamte Baueinheit miteinander verspannt ist. Die axiale Sicherung des Sicherungsringes am Druckstück fixiert dieses in axialer Richtung, so dass die Verschlussplatte durch die genannte Druckfeder gegen das Druckstück gepresst wird, das wiederum über den Sicherungsring an der Stellspindel zieht und so über die Selbsthemmung des Gewindes die beteiligten Bauteile der Einheit miteinander verspannt. Damit ist ein deutlich einfacherer und zeitlich kürzerer Zusammenbau der Scheibenbremse möglich.

Nach einer vorteilhaften Weiterbildung der Erfindung ist vorgesehen, dass der Sicherungsring zur Verdrehsicherung an der Stellspindel mit axial sich erstreckenden Federarmen versehen ist, die in Axialnuten der Stellspindel eingreifen.

Zur Montage des Sicherungsringes ist dieser federnd ausgebildet und durchgehend geschlitzt, so dass er unter Aufspreizung über einen an die Stellspindel angeformten Kopf geführt werden kann, dies vor allem bei einem Austausch des Balges und des Druckstücks. Dabei wird nach dem Überfahren des Kopfes der Stellspindel der Sicherungsring zusammengedrückt, wozu sein Außendurchmesser kleiner ist als der Innendurchmesser des Druckstücks.

Zur axialen Sicherung des Sicherungsringes mit dem Druckstück weist der Sicherungsring über den Umfang verteilte, radial ausgerichtete Laschen auf, die in eine umfängliche Innennut des Druckstücks aufgrund der Rückstellkräfte des federnden Sicherungsringes eingreifen.

Durch die erwähnte Verdrehsicherung mittels der in die Axialnuten der Stellspindel eingreifenden Federarme wird der Sicherungsring beim Verdrehen der Stellspindel mitgedreht. Dies ermöglicht eine Rückdrehsicherung im Zusammenwirken mit dem Ring einer Sekundärdichtung des Balges, die einerseits mit der Brücke verbunden ist, durch reibschlüssige Befestigung des Ringes und andererseits die reibschlüssige Verbindung des Balges mit der Verschlussplatte herstellt, wobei dieser mit dem Ring der Sekundärdichtung verbunden ist.

Zur Rückdrehsicherung sind am Sicherungsring, auf der dem Druckstück abgewandten Seite Nasen vorgesehen, die beim Zurückdrehen der Stellspindel in Aussparungen des Ringes eingreifen.

Dabei sind die gebildeten Stege zwischen den Aussparungen so ausgelegt, dass ihre Breite, über die Übersetzung des Gewindes der Stellspindel umgerechnet, beim Zurückdrehen bei einem axialen Rückdrehweg von beispielsweise 0,1 mm übersprungen wird. Die Aussparungen hingegen sind so breit, dass ein axialer Rückdrehweg von in diesem Fall 0,4 mm zurückgelegt wird. Dabei muss sichergestellt werden, dass der Sicherungsring axial nicht mit dem Ring der Sekundärdichtung verspannt wird. Dies wird dadurch erreicht, dass die Federarme des Sicherungsringes in axialer Richtung federnd ausgelegt sind, so dass die zum Überspringen eines Steges des Ringes notwendigen 0,1 mm axialer Rückdrehweg durch die Federwirkung abgefangen wird.

Wie erwähnt, wirken im Bereich des Druckstücks und damit im Bereich des Sicherungsringes im Betrieb der Bremse hohe Temperaturen auf die beteiligten Bauteile ein. Dies stellt besondere Herausforderungen an den Federstahl, um dessen Ausglühen zu verhindern.

Der Vorteil der beschriebenen Konstruktion liegt darin, dass sehr geringe Federwege benötigt werden, bedingt durch die Übersetzung der Gewindesteigung, üblicherweise M24-4P2, von 0,1 mm, dass die dabei auftretenden Spannungen in dem Sicherungsring unter dem Rp_{0,2}-Wert des Grundmaterials, z.B. DIN EN 10132-4-C67S, liegen. Somit ist eine axiale Federwirkung auch noch im ausgeglühten Zustand des Sicherungsringes gegeben.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine Scheibenbremse in einer teilweise geschnittenen Draufsicht,
- Figur 2: eine Baugruppe der Scheibenbremse in einer Teil-Explosionsdarstellung,
- Figur 3: die Baugruppe nach Figur 2 in einer Betriebsstellung, perspektivisch abgebildet,
- Figur 4: die Baugruppe nach Figur 3 in einer geschnittenen Draufsicht,
- Figur 5: eine Einzelheit der Scheibenbremse in mehreren unterschiedlichen Ansichten,
- Figur 6: eine weitere Einzelheit der Scheibenbremse in mehreren unterschiedlichen Ansichten.

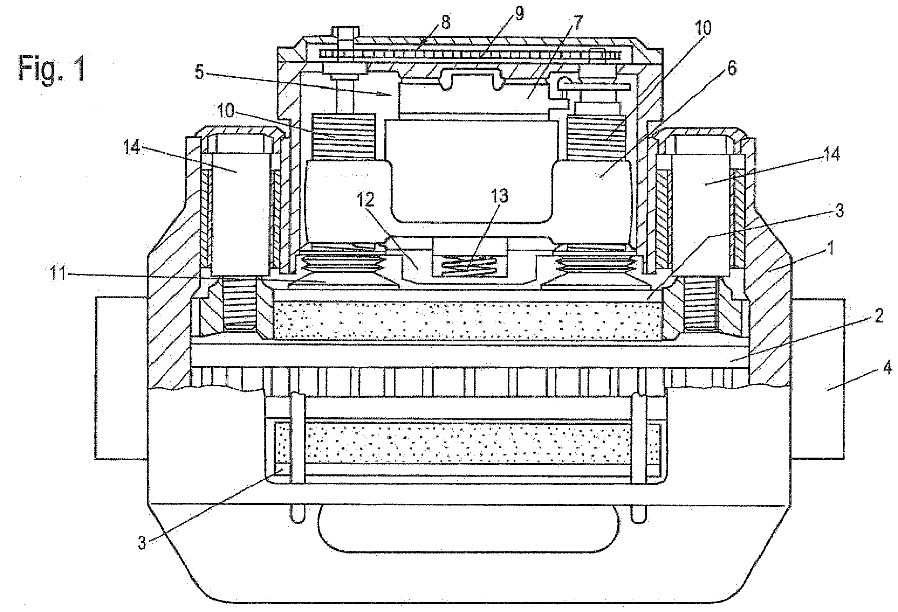

In der Figur 1 ist eine Scheibenbremse für ein Nutzfahrzeug dargestellt, mit einem eine fahrzeugseitige Bremsscheibe 2 übergreifenden Bremssattel 1, der an einem Bremsträger 4 mittels Führungsholmen 14, bezogen auf die Bremsscheibe 2, axial verschiebbar gelagert ist.

Im Bremssattel 1 ist eine Zuspanneinrichtung 5 angeordnet, mit einem Bremshebel 7, der im Fall einer Bremsung auf eine Brücke 6 einwirkt. In dieser sind im Beispiel zwei parallel und abständig zueinander angeordnete Stellspindeln 10 gehalten, die an ihrem der Bremsscheibe 2 zugewandten Ende jeweils ein Druckstück 11 tragen, die bei einer Bremsung gegen einen zugeordneten Bremsbelag 3 pressbar sind, der, ebenso wie ein gegenüberliegender, reaktionsseitiger Bremsbelag 3 an die Bremsscheibe 2 gedrückt wird.

Zum Ausgleich eines sich verändernden Lüftspiels, d.h. des Abstands zwischen dem Bremsbelag 3 und der Bremsscheibe 2, ist eine Nachstelleinrichtung 8 vorgesehen, mit der bei Betätigung der Bremse die Stellspindeln 10 in Richtung der Bremsscheibe 2 verdrehbar sind, wobei hierzu die Stellspindeln 10 mit einem Außengewinde versehen sind, das in ein Innengewinde der Brücke 6 eingreift.

Zur Synchronisierung der Nachstellung ist ein Zugmitteltrieb vorgesehen, mit einem Zugmittel 9, im Beispiel in Form einer Kette.

Zur Rückstellung der Brücke 6 nach einem Lösen der Bremse ist eine Druckfeder 13 vorgesehen, die sich einerseits an der Brücke 6 und andererseits an einer Verschlussplatte 12 abstützt, die einen die Zuspanneinrichtung 5 aufnehmenden Aufnahmeraum des Bremssattels 1 auf der der Bremsscheibe 2 zugewandten Seite verschließt und dabei fest mit dem Bremssattel 1 verbunden ist, beispielsweise durch Verschrauben.

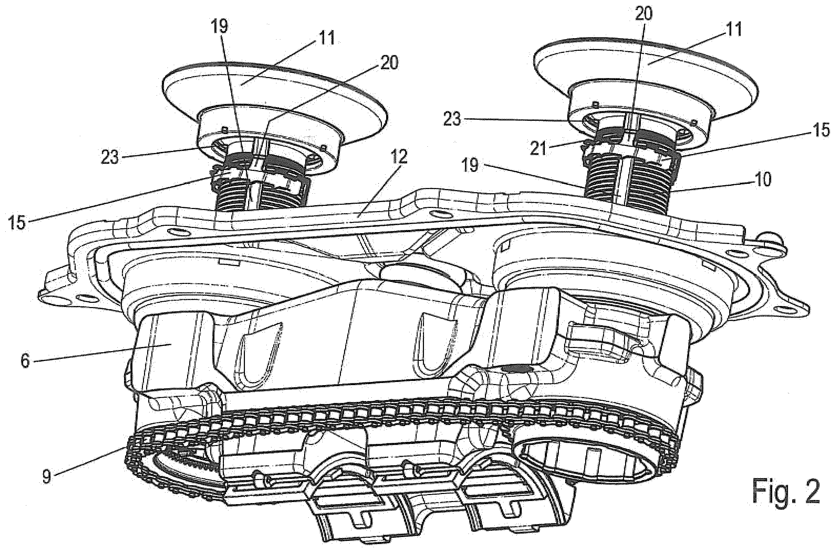

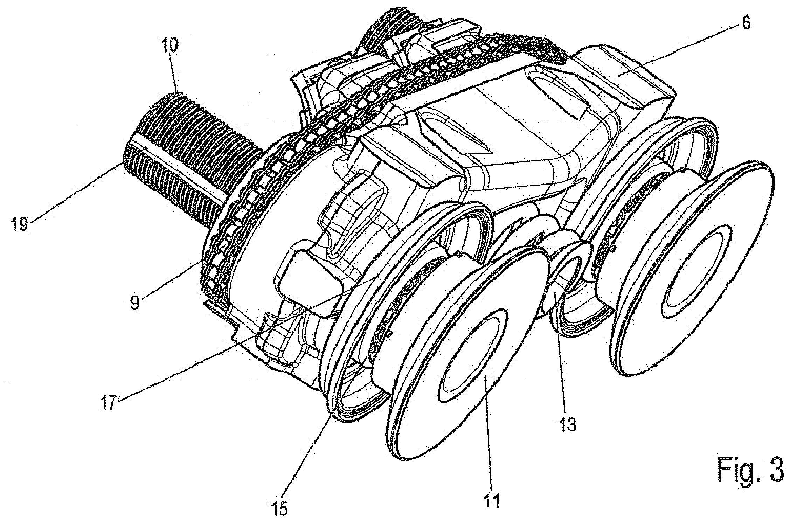

In den Figuren 2 und 3 ist ein Teil der Scheibenbremse dargestellt, der als vormontierte Baueinheit aus der Brücke 6, dem Zugmitteltrieb 9, den Stellspindeln 10 sowie den Druckstücken 11 und der Verschlussplatte 12 besteht und der so komplettiert in den Bremssattel 1 eingesetzt wird.

Gemäß der Erfindung ist an der jeweiligen Stellspindel 10 verdrehgesichert ein Sicherungsring 15 angeordnet, an dem axial gesichert und verdrehbar das zugeordnete Druckstück 11 gehalten ist.

Zur Verdrehsicherung mit der Stellspindel 10 weist der Sicherungsring 15 Federarme 20 auf, die in Axialnuten 19 der Stellspindel 10 eingreifen.

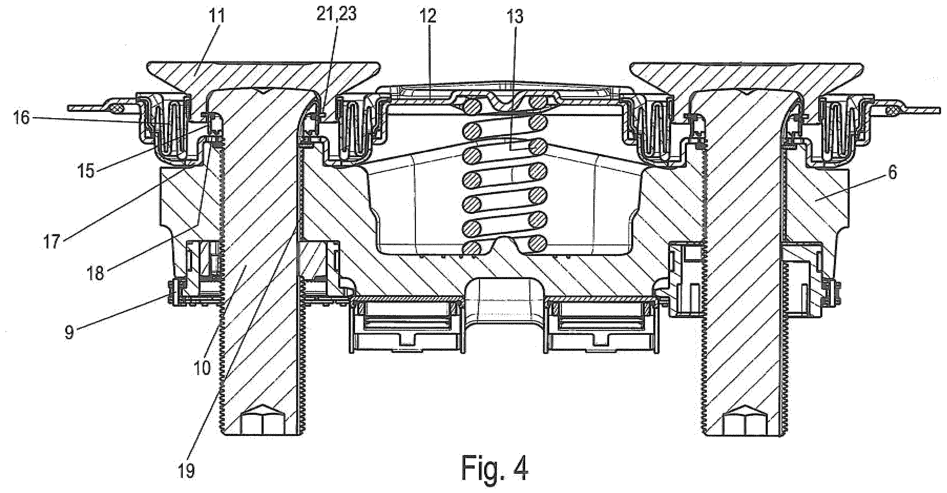

In der Figur 2 ist eine Vormontagestellung der Druckstücke 11 zu den Stellspindeln 10 abgebildet, während die Figuren 3 und 4 jeweils die montierte Stellung der Druckstücke 11 wiedergibt.

In der Figur 4 ist überdies zu erkennen, dass der Durchtrittsbereich der Stellspindeln 10 durch die Verschlussplatte 12 jeweils durch einen Balg 16, hier ein Faltenbalg, abgedichtet ist, der einerseits am Druckstück 11 und andererseits an der Verschlussplatte 12 gehalten ist.

Zur letztgenannten Befestigung ist eine Sekundärdichtung 17, die topfartig mit einem Ring als formstabiles Bauteil vorliegt, vorgesehen, die in die Durchtrittsöffnung der Verschlussplatte 12 eingepresst ist und an der der Balg 16 gehalten ist, während die Sekundärdichtung 17 andererseits an der Brücke 6 befestigt ist.

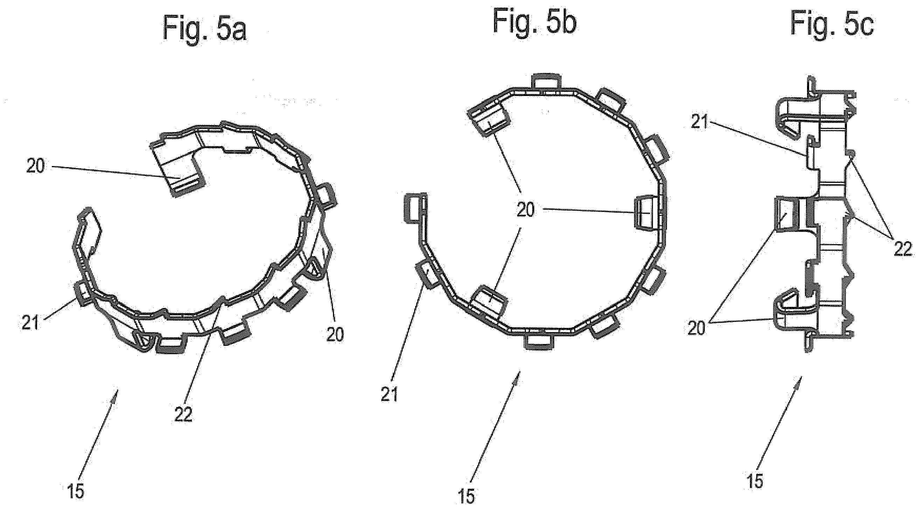

Der Sicherungsring 15 ist als Einzelheit in der Figur 5 abgebildet, wobei die Figur 5a) eine perspektivische Ansicht, die Figur 5b) eine Draufsicht und die Figur 5c) eine Seitenansicht wiedergeben.

Insbesondere in der Figur 5b) ist zu erkennen, dass der Sicherungsring 15 eine mehreckige Kontur aufweist, deren Ecken an der Wandung einer einen verdickten Kopf der Stellspindel 10 aufnehmenden Öffnung des Druckstücks 11 anliegen. Der aus Federblech gebildete Sicherungsring 15 ist axial durchgängig geschlitzt, so dass er problemlos spreizbar ist.

Hierdurch kann der Sicherungsring 15 über den verdickten Kopf der Stellspindel 10 geschoben werden, bis er in eine Endlage hinter den verdickten Kopf gebracht ist, in der dann die Federarme 20 mit nach innen abgewinkelten Schenkeln in den Axialnuten 19 der Stellspindel 10 einliegen. Im Beispiel sind drei Axialnuten 19 und Federarme 20 vorgesehen, die in gleichem Winkelabstand zueinander angeordnet sind.

Weiter ist in der Figur 5 deutlich zu erkennen, dass der Sicherungsring 15 radial nach außen gerichtete Laschen 21 aufweist, die zur axialen Sicherung des Druckstücks 11 in eine umlaufende Nut 23 der den verdickten Kopf der Stellspindel 10 aufnehmenden Öffnung des Druckstücks 11 eingreifen.

Auf der den Laschen 21 abgewandten Seite sind an den Sicherungsring 15 Nasen 22 angeformt, die bei einem Zurückdrehen der Stellspindel 10 in Aussparungen 18 des Ringes der Sekundärdichtung 17 eingreifen (Fig. 4).

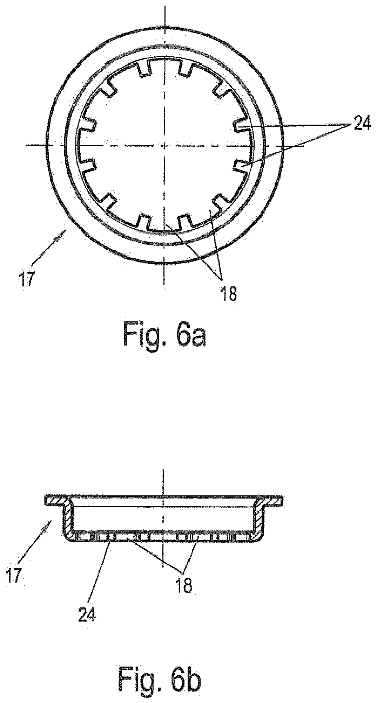

In der Figur 6 ist die Sekundärdichtung 17 als Einzelheit dargestellt und zwar in der Figur 6a) in einer Draufsicht und in der Figur 6b) in einer geschnittenen Seitenansicht.

Zwischen den Ausnehmungen 18 gebildete Stege 24 sind dabei so ausgelegt, dass ihre Länge in Drehrichtung, über die Übersetzung des Gewindes der Stellspindel 10 umgerechnet, beim Zurückdrehen der Stellspindel 10 bei einem axialen Rückdrehweg von 0,1 mm übersprungen wird. Die Ausnehmungen 18 hingegen sind in gleicher Richtung so bemessen, dass ein axialer Rückdrehweg von 0,4 mm zurückgelegt wird.

Es muss sichergestellt werden, dass der Sicherungsring 15 axial nicht mit der Sekundärdichtung 17 verspannt. Dies wird dadurch erreicht, dass die in den Axialnuten 19 liegenden Federarme in axialer Richtung federnd ausgelegt sind, so dass die zum Überspringen eines Steges 24 an der Sekundärdichtung 17 notwendigen 0,1 mm axialer Rückdrehweg durch die Federwirkung abgefangen werden.

Beim weiteren Zurückdrehen der Stellspindel 10 kommen die Flanken der Nasen 22 des Sicherungsringes 15 mit den Flanken der Stege 24 der Sekundärdichtung 17 in Kontakt und das anstehende Drehmoment von zum Beispiel ca. 35 Nm wird nur in Umfangsrichtung abgefangen. Die Presspassung der Sekundärdichtung 17 zur Brücke 6 ist so ausgelegt, dass dieses Drehmoment übertragen werden kann.

Zwar ist die Kontaktfläche zwischen dem Sicherungsring 15 und der Sekundärdichtung 17 sehr klein, so dass es lokal zu Plastifizierungen an der Sekundärdichtung 17 kommt, jedoch sind diese unproblematisch, da zum einen ein weiteres Überspringen eines Steges 24 durch den zur Verfügung stehenden axialen Rückdrehweg abgesichert ist und die Funktion des Rückdrehens über die Lebensdauer der Bremse üblicherweise nur 10mal benötigt wird.

### Bezugszeichenliste

- 1: Bremssattel
- 2: Bremsscheibe
- 3: Bremsbelag
- 4: Bremsträger
- 5: Zuspanneinrichtung
- 6: Brücke
- 7: Bremshebel
- 8: Nachstelleinrichtung
- 9: Zugmittel
- 10: Stellspindel
- 11: Druckstück
- 12: Verschlussplatte
- 13: Druckfeder
- 14: Führungsholm
- 15: Sicherungsring
- 16: Balg
- 17: Sekundärdichtung
- 18: Ausnehmung
- 19: Axialnut
- 20: Federarm
- 21: Lasche
- 22: Nase
- 23: Nut
- 24: Steg

## Patentansprüche

1. Scheibenbremse für ein Nutzfahrzeug, mit einem eine Bremsscheibe (2) übergreifenden Bremssattel (1), mindestens einer Zuspanneinrichtung (5) zum Zuspannen der Scheibenbremse mittels einer verschiebbar geführten Brücke (6), wobei die Brücke (6) mindestens eine Gewindebohrung aufweist, in die eine mit einem Außengewinde versehene, eine Verschlussplatte (12) durchtretende Stellspindel (10) eingeschraubt ist, die ein dazu verdrehbares Druckstück (11) trägt, mit dem ein Bremsbelag (3) gegen die Bremsscheibe (2) drückbar ist und einer mit der Stellspindel (10) in Wirkverbindung stehenden Nachstelleinrichtung (8) zum Nachstellen eines Lüftspiels, wobei der Durchtrittsbereich der Stellspindel (10) durch einen Balg (16) abgedichtet ist, der einerseits am Bremssattel (1) und andererseits am Druckstück (11) gehalten ist, **dadurch gekennzeichnet, dass** ein Sicherungsring (15) vorgesehen ist, der verdrehgesichert an der Stellspindel (10) und axial gesichert und verdrehbar am Druckstück (11) gehalten ist.

2. Scheibenbremse nach Anspruch 1, **dadurch gekennzeichnet, dass** der Sicherungsring (15) formschlüssig an der Stellspindel (10) gehalten ist.

3. Scheibenbremse nach Anspruch 1 oder 2, **dadurch gekennzeichnet, dass** der Sicherungsring (15) Federarme (20) aufweist, die in Axialnuten (19) der Stellspindel (10) einliegen.

4. Scheibenbremse nach einem der vorhergehenden Ansprüche, **dadurch gekennzeichnet, dass** der Sicherungsring (15) aus einem federnden Material, vorzugsweise Federstahl, besteht.

5. Scheibenbremse nach einem der vorhergehenden Ansprüche, **dadurch gekennzeichnet, dass** der Sicherungsring (15) durchgängig geschlitzt ist.

6. Scheibenbremse nach einem der vorhergehenden Ansprüche, **dadurch gekennzeichnet, dass** der Sicherungsring (15) radial ausgerichtete Laschen (21) aufweist, die in eine umfängliche Nut (23) des Druckstücks (11) eingreifen, wobei die Nut (23) an der Wandung einer Öffnung des Druckstücks (11) vorgesehen ist, in der ein verdickter Kopf der Stellspindel (10) einliegt.

7. Scheibenbremse nach einem der vorhergehenden Ansprüche, **dadurch gekennzeichnet, dass** der lichte Durchmesser des Sicherungsringes (15) kleiner ist als der Durchmesser des verdickten Kopfes der Stellspindel (10).

8. Scheibenbremse nach einem der Ansprüche 6 oder 7, **dadurch gekennzeichnet, dass** der Sicherungsring (15) auf seiner den Laschen (21) abgewandten Seite axial ausgerichtete Nasen (22) aufweist, die in Ausnehmungen einer topfartigen Sekundärdichtung (17) einliegen, die einerseits in die Durchtrittsöffnung des Verschlussplatte (12) eingepresst ist und die andererseits an der Brücke (6) befestigt ist.

9. Scheibenbremse nach Anspruch 8, **dadurch gekennzeichnet, dass** eine Mehrzahl von Ausnehmungen (18) über den Umfang der Sekundärdichtung verteilt sind.

10. Scheibenbremse nach Anspruch 9, **dadurch gekennzeichnet, dass** die Länge der Ausnehmungen (18) größer ist als die Länge der Stege (24) zwischen zwei Ausnehmungen (18).

11. Scheibenbremse nach einem der vorhergehenden Ansprüche, **dadurch gekennzeichnet, dass** der Sicherungsring (15) eine Vieleck-Kontur aufweist.

12. Scheibenbremse nach einem der Ansprüche 3 bis 11, **dadurch gekennzeichnet, dass** die Federarme (20) jeweils einen in radialer Richtung nach innen abgewinkelten Schenkel aufweisen, der in der Axialnut (19) der Stellspindel (10) einliegt.

13. Scheibenbremse nach einem der Ansprüche 3 bis 12, **dadurch gekennzeichnet, dass** die Axialnuten (19) in gleichem Winkelabstand zueinander angeordnet sind.

## Claims

1. Disk brake for a utility vehicle, having a brake caliper (1) which engages over a disk brake (2), having at least one application device (5) for applying the disk brake by means of a displaceably guided bridge (6), wherein the bridge (6) has at least one threaded bore into which there is screwed an actuating spindle (10) which is equipped with an external thread and which extends through a closure plate (12), which actuating spindle bears a thrust piece (11) which is rotatable for this purpose and by means of which a brake pad (3) can be pressed against the brake disk (2), and having a readjustment device (8) which is operatively connected to the actuating spindle (10) and which serves for the readjustment of an air gap, wherein the passage region of the actuating spindle (10) is sealed off by means of a bellows (16) which is held at one side on the brake caliper (1) and at the other side on the thrust piece (11), **characterized in that** a securing ring (15) is provided which is held on the actuating spindle (10) in a manner secured against relative rotation and on the thrust piece (11) in an axially secured and relatively rotatable manner.

2. Disk brake according to Claim 1, **characterized in that** the securing ring (15) is held in positively locking fashion on the actuating spindle (10).

3. Disk brake according to Claim 1 or 2, **characterized in that** the securing ring (15) has spring arms (20) which lie in axial grooves (19) of the actuating spindle (10).

4. Disk brake according to one of the preceding claims, **characterized in that** the securing ring (15) is composed of a resilient material, preferably spring steel.

5. Disk brake according to one of the preceding claims, **characterized in that** the securing ring (15) has a slot extending all the way through.

6. Disk brake according to one of the preceding claims, **characterized in that** the securing ring (15) has radially oriented tabs (21) which engage into a circumferential groove (23) of the thrust piece (11), wherein the groove (23) is provided on the wall of an opening, in which a thickened head of the actuating spindle (10) lies, of the thrust piece (11).

7. Disk brake according to one of the preceding claims, **characterized in that** the clear diameter of the securing ring (15) is smaller than the diameter of the thickened head of the actuating spindle (10).

8. Disk brake according to one of Claims 6 and 7, **characterized in that** the securing ring (15), on its side averted from the tabs (21), has axially oriented lugs (22) which lie in recesses of a pot-shaped secondary seal (17) which, at one side, is pressed into the passage opening of the closure plate (12) and which, at the other side, is fastened to the bridge (6).

9. Disk brake according to Claim 8, **characterized in that** a multiplicity of recesses (18) is distributed over the circumference of the secondary seal.

10. Disk brake according to Claim 9, **characterized in that** the length of the recesses (18) is greater than the length of the webs (24) between two recesses (18).

11. Disk brake according to one of the preceding claims, **characterized in that** the securing ring (15) has a polygonal contour.

12. Disk brake according to one of Claims 3 to 11, **characterized in that** the spring arms (20) each have a limb angled inwardly in a radial direction, which limb lies in the axial groove (19) of the actuating spindle (10).

13. Disk brake according to one of Claims 3 to 12, **characterized in that** the axial grooves (19) are arranged at uniform angular intervals with respect to one another.

## Revendications

1. Frein à disque d'un véhicule utilitaire, comprenant un étrier (1) de frein enjambant un disque (2) de frein, au moins un dispositif (5) de serrage pour serrer le frein à disque au moyen d'un pontet (6) guidé à coulissement, le pontet (6) ayant au moins un taraudage, dans lequel est vissée une broche (10) de réglage pourvue d'un filetage et traversant une plaque (12) de fermeture, broche qui porte une pièce (11) d'application d'une pression, qui peut subir une torsion et par laquelle une garniture (3) de frein peut être pressée sur le disque (2) de frein et un dispositif (8) de rattrapage, en liaison avec la broche (10) de réglage, pour rattraper un jeu de garniture, la partie de passage de la broche (10) de réglage étant rendue étanche par un soufflet (16), qui est retenu d'une part à l'étrier (1) de frein et d'autre part à la pièce (11) d'application d'une pression, **caractérisé en ce qu'**il est prévu une rondelle (15) de sûreté, qui est fixée, sans pouvoir être soumise à une torsion, à la broche (10) de réglage et axialement et qui est retenue avec possibilité d'être soumise à une torsion, à la pièce (11) d'application d'une pression.

2. Frein à disque suivant la revendication 1, **caractérisé en ce que** la rondelle (15) de sûreté est retenue à complémentarité de forme à la broche (10) de réglage.

3. Frein à disque suivant la revendication 1 ou 2, **caractérisé en ce que** la rondelle (15) de sûreté a des bras (20) de ressort, qui entrent dans des rainures (19) axiales de la broche (10) de réglage.

4. Frein à disque suivant l'une des revendications précédentes, **caractérisé en ce que** la rondelle (15) de sûreté est en un matériau élastique, de préférence en un acier pour ressort.

5. Frein à disque suivant l'une des revendications précédentes, **caractérisé en ce que** la rondelle (15) de sûreté est fendue d'une manière continue.

6. Frein à disque suivant l'une des revendications précédentes, **caractérisé en ce que** la rondelle (15) de sûreté a des ergots (21) dirigés radialement, qui pénètrent dans une rainure (23) périphérique de la pièce (11) d'application d'une pression, la rainure (23) étant prévue sur la paroi d'une ouverture de la pièce (11) d'application d'une pression, dans laquelle entre une tête épaissie de la broche (10) de réglage.

7. Frein à disque suivant l'une des revendications précédentes, **caractérisé en ce que** le diamètre intérieur de la rondelle (15) de sûreté est plus petit que le diamètre de la tête épaissie de la broche (10) de réglage.

8. Frein à disque suivant l'une des revendications 6 ou 7, **caractérisé en ce que** la rondelle (15) de sûreté a, du côté loin des ergots (21), des becs (22) dirigés axialement, qui entrent dans des évidements d'une étanchéité (17) secondaire en forme de cuvette, qui, d'une part, est enfoncée dans l'ouverture de passage de la plaque (12) de fermeture et qui, d'autre part, est fixée au pontet (6).

9. Frein à disque suivant la revendication 2, **caractérisé en ce qu'**une pluralité d'évidements (18) sont répartis sur le pourtour de l'étanchéité secondaire.

10. Frein à disque suivant la revendication 9, **caractérisé en ce que** la longueur des évidements (18) est plus grande que la longueur des parties (24) pleines entre deux évidements (18).

11. Frein à disque suivant l'une des revendications précédentes, **caractérisé en ce que** la rondelle (15) de sûreté a un contour polygonal.

12. Frein à disque suivant l'une des revendications 3 à 11, **caractérisé en ce que** les bras (20) de ressort ont chacun une branche coudée vers l'intérieur en direction radiale, qui entre dans la rainure (19) axiale de la broche (10) de réglage.

13. Frein à disque suivant l'une des revendications 3 à 12, **caractérisé en ce que** les rainures (19) axiales sont disposées de manière équidistante angulairement.
